# EUROPEAN PATENT SPECIFICATION

(11) **EP 2 693 914 B1**
(45) Date of publication and mention of the grant of the patent: **16.12.2015**
(21) Application number: 11778655.8
(22) Date of filing: 10.08.2011
(51) Int. Cl.: A47B 47/02, F16B 12/50

(54) **SHELVING UNIT**
REGALEINHEIT
ÉLÉMENT DE RAYONNAGE

(30) Priority: 11.08.2010 GB 201013516
(43) Date of publication of application: 12.02.2014
(73) Proprietor: Storage Solutions Limited, Tetbury, Gloucestershire GL8 1AA (GB); Sully, Peter, Faringdon, Oxfordshire SN7 8NY (GB)
(72) Inventor: SULLY, Peter, Farringdon, Oxfordshire SN7 8NY (GB)
(74) Representative: Butler, Michael John
(86) International application number: PCT/GB2011/051511
(87) International publication number: WO 2012/020260

(56) References cited:
- JP-A- 8 033 529

## Description

This invention relates to a shelving unit. It is particularly concerned with a shelving arrangement in which a series of vertical uprights are linked by a series of horizontal beams to provide a structure which can carry a load either directly on the beams or by way of a support mounted on the beams. Typically the uprights define a series of locations along the length of the upright. A beam can be located with the upright at one or more of these locations such as by way of, for example, a tang integral with the upright (the shelf having an aperture for locating on the tang) or by way of a mechanical connection such as a rivet or bolt.

In JP 0333529 A there is disclosed a shelving unit in the form of a beam having a back member from each of the edges of which projects a flange, the outer edge of each flange having a lip projecting so that the beam has a C-shaped cross section, the beam having two ends.

According to one aspect, the present invention is characterised by at least one of the ends having a first flange extending to the end but with the lip of the first flange terminating before the end to leave a gap between the end of the lip and the end of the flange; the second flange at said end ending in an angled edge relative to the back member with an outer corner of the second flange remote from the back member being set back longitudinally from the end of the back member, the lip of the second flange terminating at the outer corner; and the back member at or near the end being adapted to provide at least one location whereby the beam can be attached to a shelf support.

According to a preferred version, the shelving unit is characterised in that at or near the, or each, end of the beam at least one aperture is provided by means of which the end of the beam can be detachably mounted on a complementary tang in a support for the beam whereby the support locates and supports the beam.

According to a preferred version, the shelving unit is characterised by the or both flanges of the beam being provided with an angled end to enable the beam to be juxtaposed with a similar angled end on a further beam at right angles to the beam without overlapping of the beam and further beam.

According another aspect of the invention, there is provided a shelving unit in the form of a beam as described above, in combination with a further beam having a back member from each of the edges of which projects a flange, and with a vertical support column; wherein the support column is L-shaped in cross section with two integral arms, an end of the beam is mounted to one arm of the support column and an end of the further beam is mounted to the other arm of the support column at the same level as, but at right angles to, the beam; the portion of the flange of the beam which extends over the gap overlaps a portion of the corresponding flange of the further beam; the end portion of the other flange of the beam is bevelled and the end portion of the corresponding flange of the further beam is bevelled, whereby the end portion of the other flange of the beam is aligned with, but does not overlap, the end portion of the corresponding flange of the further beam.

An exemplary embodiment of the invention will now be described with reference to the accompanying drawings of which:
Figure 1 is a perspective side view of an end of a beam;
Figure 2 is an end view of the beam of Figure 1;
Figure 3 is a perspective view of the beam of Figures 1 and 2 and a support structure with which it is to be engaged as part of a shelf assembly;
Figure 4 is a close up of the components of Figure 3 just prior to engagement; and
Figures 5A and 5B shows components as described in connection with Figures 1 to 4 being assembled to form a shelving structure.

The drawings show a shelving unit comprising a beam 11 having a back member 12 from the edges 13, 14 of which project respectively, a flange 15, 16. Outer edges, respectively edges 17, 18 have, respectively a lip 19, 20 projecting so that the beam 11 has a C-shaped cross section.

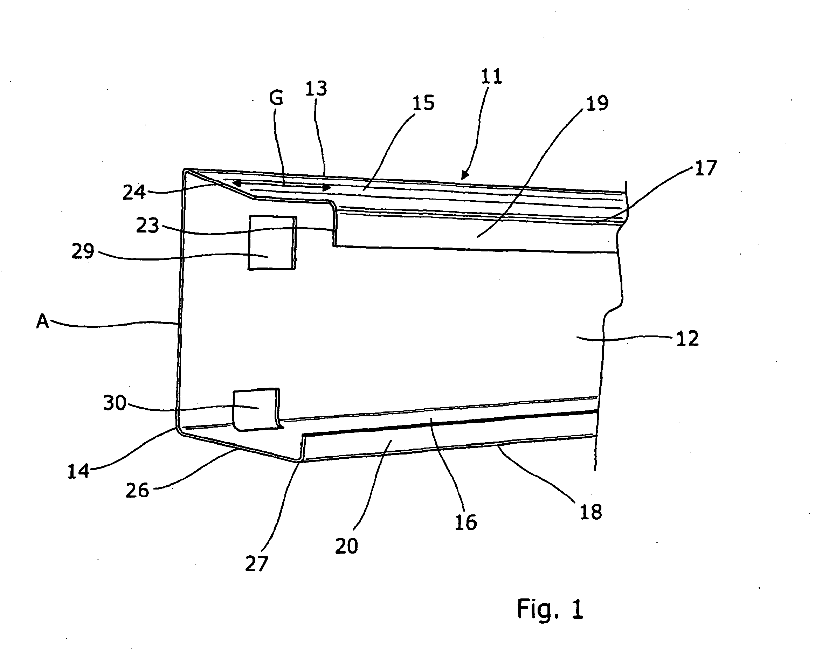

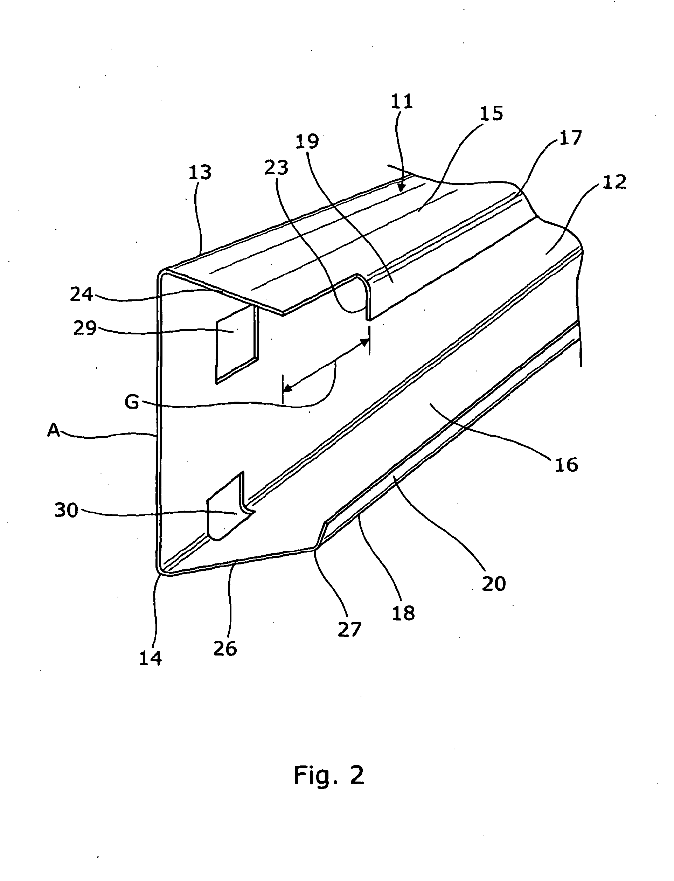

Only one end, end A, of the beam 11 is shown but the other end, not shown, is formed as a mirror image of that shown in Figures 1 to 4 and functions in a similar way as will be described hereafter.

The beam 11 has end A with first flange 15 extending to the end A but with a lip 19 of the first flange 15 terminating before the end A to leave a gap G between end 23 of the lip 19 and end 24 of the first flange 15. End 23 of the lip 19 is rounded to improve manipulation of the beam during attachment to a vertical support as will be described hereafter.

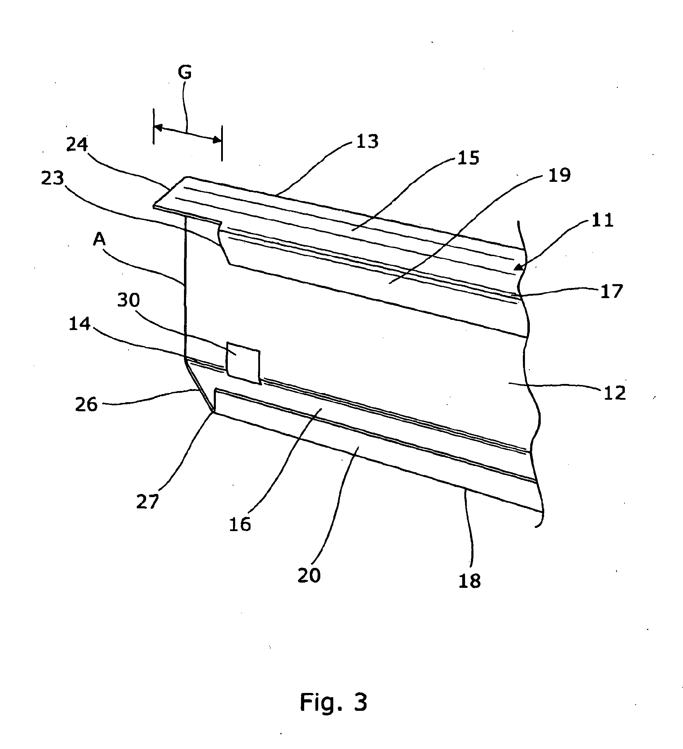

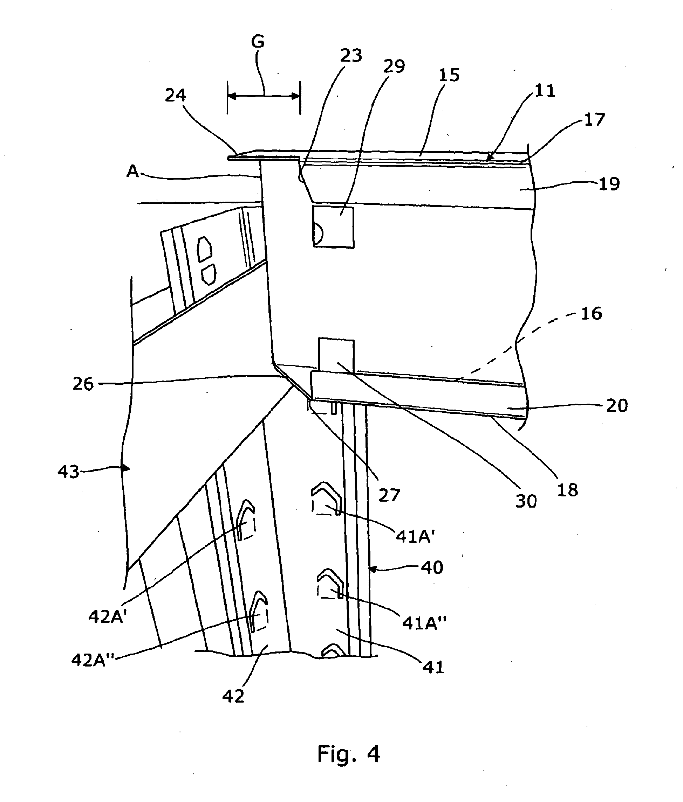

The beam 11 has a second flange 16 ending with an angled edge 26 relative to the back member 12 with an outer corner 27 of the second flange 16 remote from the back member 12 being set back longitudinally from the end A of the beam. Lip 20 of the second flange 16 terminates at outer corner 27 (see particularly Figures 3 and 4.

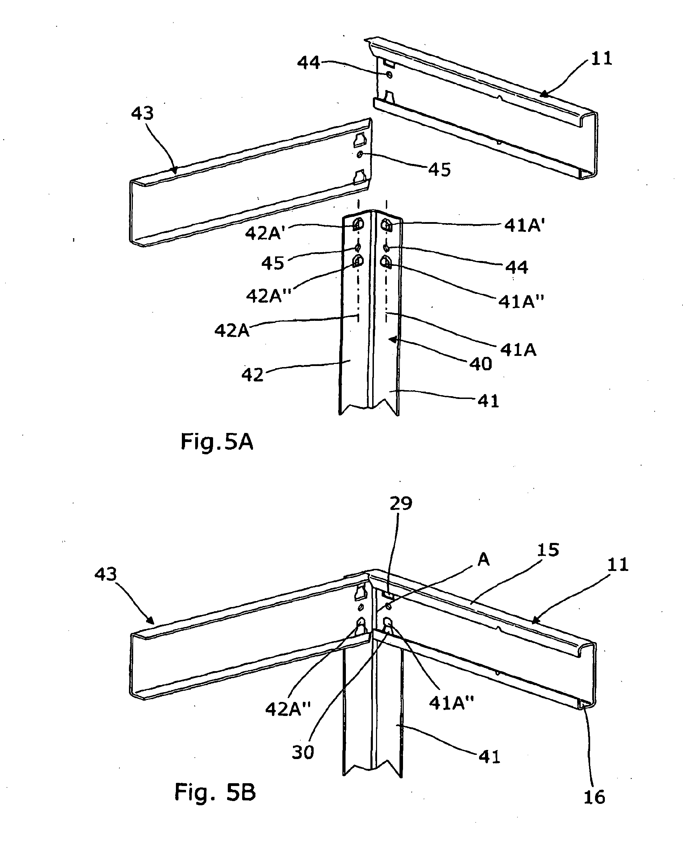

The back member 12 is provided with apertures 29, 30 to enable the back member to be located on, and retained by tangs as described hereafter in connection with Figures 5A and 5B.

Figures 5A and 5B show a beam 11 identical in form and function to that described in connection with Figures 1 to 4 being assembled to form a shelving structure. The components of beam 11 are identified by similar references. The beam 11 is assembled by coupling to a vertical column 40 which forms a corner of the required shelving structure. The vertical column 40 is L-shaped in cross-section with two integral arms 41, 42.

A further beam 43 is provided for mounting at the same level as, but at right angles to, beam 11 as will be described hereafter.

Each arm 41, 42 is pierced by a series of tangs, respectively series 41A, 42A of which only the top two of each series, respectively 41A', 41A" and 42A', 42A" are shown. Holes 44, 45 are provided whereby the beams 11, 43 can be secured once they have been mounted on the vertical column 40 on their respective tangs. Figure 5A shows the beams 11, 43 being presented for mounting on the column 40 and Figure 5B shows the beams 11, 43 located in place on the column 40.

Referring to Figure 1 the portion of the upper flange 15 extending over the gap G serves to overlap the corresponding portion (Figures 5A, 5B) of beam 43. Vertical loads arising at the end of beam 11 are thus readily transmitted into the end of beam 43 so contributing to the load distribution in the working shelf assembly. The end portion of second flange 16 is bevelled so that it aligns with, but does not overlap, the corresponding end of lower flange of beam 43. These two features make a significant contribution to the stability and load carrying capacity of the resulting working shelf assembly.

The present invention provides storage units which are readily assembled and of improved stability compared with many storage units currently available. One advantage lies in the engagement between members being readily achieved without a need for further components

## Claims

1. A shelving unit in the form of beam (11) having a back member (12) from each of the edges (13,14) of which projects a flange (15, 16), the outer edge (17, 18) of each flange having a lip (19, 20) projecting so that the beam has a C-shaped cross section, the beam having two ends, **characterised by** at least one of the ends (A) having a first flange (15) extending to the end (A) but with the lip (19) of the first flange (15) terminating before the end (A) to leave a gap (G) between the end (23) of the lip (19) and the end (24) of the flange; the second flange (16) at said end (A) ending in an angled edge (26) relative to the back member (12) with an outer corner (27) of the second flange (16) remote from the back member (12) being set back longitudinally from the end (A) of the back member, the lip (20) of the second flange (16) terminating at the outer corner (27) ; and the back member(12) at or near the end (A) being adapted to provide at least one location (29, 30) whereby the beam can be attached to a shelf support (40).

2. A shelving unit as claimed in claim 1 **characterised in that** at or near the, or each, end of the beam (11) at least one aperture (29, 30) is provided by means of which the end of the beam (11) can be detachably mounted on a complementary tang (41A', 41A", 42A', 42A") in a support (40) for the beam whereby the support (40) locates and supports the beam.

3. A shelving unit as claimed in claim 1 or 2 **characterised by** the or both flanges (15, 16) of the beam being provided with an angled end to enable the beam (11) to be juxtaposed with a similar angled end on a further beam at right angles to the beam (11) without overlapping of the beam (11) and further beam.

4. A shelving unit in the form of a beam (11) as claimed in claim 1, 2 or 3, in combination with a further beam (43) having a back member from each of the edges of which projects a flange, and with a vertical support column (40); wherein the support column (40) is L-shaped in cross section with two integral arms (41, 42), an end of the beam (11) is mounted to one arm (41) of the support column and an end of the further beam (43) is mounted to the other arm (42) of the support column at the same level as, but at right angles to, the beam (11); the portion of the flange (15) of the beam (11) which extends over the gap (G) overlaps a portion of the corresponding flange of the further beam (43); the end portion of the other flange (16) of the beam (11) is bevelled and the end portion of the corresponding flange of the further beam (43) is bevelled, whereby the end portion of the other flange (16) of the beam (11) is aligned with, but does not overlap, the end portion of the corresponding flange of the further beam (43).

## Patentansprüche

1. Regaleinheit in Form eines Trägers (11), der ein rückseitiges Element (12) besitzt, von dessen beiden Kanten (13, 14) jeweils ein Flansch (15, 16) vorsteht, wobei die Außenkante (17, 18) jedes Flansches eine Lippe (19, 20) besitzt, die so vorsteht, dass der Träger einen C-förmigen Querschnitt aufweist, wobei der Träger zwei Enden besitzt, **dadurch gekennzeichnet, dass** wenigstens eines der Enden (A) einen ersten Flansch (15) besitzt, der sich zu dem Ende (A) erstreckt, während die Lippe (19) des ersten Flansches (15) vor dem Ende (A) endet, um zwischen dem Ende (23) der Lippe (19) und dem Ende (14) des Flansches einen Spalt (G) zu lassen; wobei der zweite Flansch (16) an dem Ende (A) in einer angewinkelten Kante (26) in Bezug auf das rückseitige Element (12) endet, wobei eine äußere Ecke (27) des zweiten Flansches (16) entfernt von dem rückseitigen Element (12) von dem Ende (A) des rückseitigen Elements longitudinal zurückversetzt ist, wobei die Lippe (20) des zweiten Flansches (16) an der äußeren Ecke (27) endet; und das rückseitige Element (12) an dem Ende (A) oder in dessen Nähe dafür ausgelegt ist, wenigstens einen Ort (29, 30) zu schaffen, an dem der Träger an einem Regalträger (40) befestigt werden kann.

2. Regaleinheit nach Anspruch 1, **dadurch gekennzeichnet, dass** an dem oder jedem Ende des Trägers (11) oder in deren Nähe wenigstens eine Öffnung (29, 30) vorgesehen ist, mittels derer das Ende des Trägers (11) an einer komplementären Angel (41A', 41A", 42A', 42A") in einer Halterung (40) für den Träger lösbar montiert werden kann, wodurch die Halterung (40) den Träger anordnet und trägt.

3. Regaleinheit nach Anspruch 1 oder 2, **dadurch gekennzeichnet, dass** der oder jeder Flansch (15, 16) des Trägers mit einem angewinkelten Ende versehen ist, um zu ermöglichen, dass der Träger (11) neben einem ähnlich angewinkelten Ende eines weiteren Trägers rechtwinklig zu dem Träger (11) angeordnet werden kann, ohne dass der Träger (11) und der weitere Träger überlappen.

4. Regaleinheit in Form eines Trägers (11) nach Anspruch 1, 2 oder 3 in Kombination mit einem weiteren Träger (43), der ein rückseitiges Element besitzt, von dessen beiden Kanten ein Flansch vorsteht, und mit einer vertikalen Tragsäule (40); wobei die Tragsäule (40) einen L-förmigen Querschnitt mit zwei einteilig ausgebildeten Armen (41, 42) besitzt, wobei ein Ende des Trägers (11) an einem Arm (41) der Tragsäule montiert ist und ein Ende des weiteren Trägers (43) an dem anderen Arm (42) der Tragsäule auf der gleichen Höhe wie der Träger (11), jedoch rechtwinklig hierzu, montiert ist; wobei der Abschnitt des Flansches (15) des Trägers (11), der sich über dem Spalt (G) erstreckt, mit einem Abschnitt des entsprechenden Flansches des weiteren Trägers (43) überlappt; wobei der Endabschnitt des anderen Flansches (16) des Trägers (11) angeschrägt ist und der Endabschnitt des entsprechenden Flansches des weiteren Trägers (43) angeschrägt ist, wodurch der Endabschnitt des anderen Flansches (16) des Trägers (11) auf den Endabschnitt des entsprechenden Flansches des weiteren Trägers (43) ausgerichtet ist, jedoch damit nicht überlappt.

## Revendications

1. Elément de rayonnage se présentant sous la forme d'un profilé (11) ayant un élément arrière (12), à partir de chacun des bords (13, 14) duquel fait saillie un rebord (15, 16), le bord extérieur (17, 18) de chaque rebord ayant une lèvre (19, 20) faisant saillie de telle sorte que le profilé a une section transversale en forme de C, le profilé ayant deux extrémités, **caractérisé en ce qu'**au moins une des extrémités (A) a un premier rebord (15) s'étendant jusqu'à l'extrémité (A) mais la lèvre (19) du premier rebord (15) se termine avant l'extrémité (A) pour laisser un espace (G) entre l'extrémité (23) de la lèvre (19) et l'extrémité (24) du rebord ; le second rebord (16) sur ladite extrémité (A) se terminant dans un bord incliné (26) par rapport à l'élément arrière (12) avec un coin extérieur (27) du second rebord (16) éloigné de l'élément arrière (12) étant replié longitudinalement à partir de l'extrémité (A) de l'élément arrière, la lèvre (20) du second rebord (16) se terminant sur le coin extérieur (27) ; et l'élément arrière (12) sur l'extrémité (A) ou près de celle-ci étant adapté pour fournir au moins un emplacement (29, 30), moyennant quoi le profilé peut être fixé à un support de rayon (40).

2. Elément de rayonnage selon la revendication 1, **caractérisé en ce que** sur ou près de l'extrémité ou de chaque extrémité du profilé (11) est prévue au moins une ouverture (29, 30) au moyen de laquelle l'extrémité du profilé (11) peut être montée de manière détachable sur un tenon complémentaire (41A', 41A", 42A', 42A") dans un support (40) pour le profilé, moyennant quoi le support (40) positionne et supporte le profilé.

3. Elément de rayonnage selon la revendication 1 ou 2, **caractérisé en ce que** le rebord ou les deux rebords (15, 16) du profilé sont pourvus d'une extrémité inclinée pour permettre au profilé (11) d'être juxtaposé avec une extrémité inclinée similaire sur un profilé supplémentaire à angles droits par rapport au profilé (11) sans chevaucher le profilé (11) et le profilé supplémentaire.

4. Elément de rayonnage se présentant sous la forme d'un profilé (11) selon la revendication 1, 2 ou 3, en combinaison avec un profilé supplémentaire (43) ayant un élément arrière, à partir de chacun des bords duquel fait saillie un rebord, et avec une colonne de support verticale (40) ; dans lequel la colonne de support (40) a une section transversale en forme de L avec deux bras solidaires (41, 42), une extrémité du profilé (11) est montée sur un bras (41) de la colonne de support et une extrémité du profilé supplémentaire (43) est montée sur l'autre bras (42) de la colonne de support au même niveau que le profilé (11) mais à angles droits par rapport à celui-ci ; la partie du rebord (15) du profilé (11) qui s'étend sur l'espace (G) chevauche une partie du rebord correspondant du profilé supplémentaire (43) ; la partie d'extrémité de l'autre rebord (16) du profilé (11) est biseautée et la partie d'extrémité du rebord correspondant du profilé supplémentaire (43) est biseautée, moyennant quoi la partie d'extrémité de l'autre rebord (16) du profilé (11) est alignée avec la partie d'extrémité du rebord correspond du profilé supplémentaire (43), mais ne chevauche pas celle-ci.
